# EUROPEAN PATENT SPECIFICATION

(11) **EP 1 121 823 B1**
(45) Date of publication and mention of the grant of the patent: **02.01.2008**
(21) Application number: 00956300.8
(22) Date of filing: 24.07.2000
(51) Int. Cl.: H04Q 7/38

(54) **RADIO COMMUNICATION SYSTEM**
FUNK-KOMMUNIKATIONSSYSTEM
SYSTEME DE RADIOCOMMUNICATION

(30) Priority: 03.08.1999 GB 9918130; 14.09.1999 GB 9921548
(43) Date of publication of application: 08.08.2001
(73) Proprietor: Koninklijke Philips Electronics N.V., 5621 BA Eindhoven (NL)
(72) Inventor: MOUSLEY, Timothy, J., NL-5656 AA Eindhoven (NL); HUNT, Bernard, NL-5656 AA Eindhoven (NL)
(74) Representative: Damen, Daniel Martijn
(86) International application number: PCT/EP2000/007192
(87) International publication number: WO 2001/010158

(56) References cited:
- EP-A- 0 399 611
- EP-A- 0 557 175
- EP-A- 0 841 763
- EP-A- 0 877 512
- WO-A-00/07401
- WO-A-00/13426
- US-A- 5 528 664

## Description

### Technical Field

The present invention relates to a radio communication system having a random access channel for the transmission of data from a secondary station to a primary station, and further relates to primary and secondary stations for use in such a system and to a method of operating such a system. While the present specification describes a system with particular reference to the emerging Universal Mobile Telecommunication System (UMTS), it is to be understood that the techniques described are equally applicable to use in other mobile radio systems. In this specification the term random access channel refers to the logical channel on which random access transmissions take place, which would typically consist of a number of distinct physical channels.

### Background Art

A random access channel is a normal component of a radio communication system, enabling a Mobile Station (MS) to send short messages to a Base Station (BS). Applications include signalling to the BS when the MS is turned on, sending a packet of data to the BS when the MS may not be engaged in a call, and requesting the BS to allocate a resource for the MS to use.

In a system where mobile stations often have a requirement to send packets of data to the BS when not actually engaged in a call it is advantageous to provide a random access packet channel with similar characteristics to a standard random access channel but intended for the transmission of small and medium sized packets from a MS to the BS.

In an embodiment of a such a scheme developed for UMTS, there are a number of random access packet channels available to a MS. A request for access to a packet channel sent by the MS is encoded with a randomly-chosen signature, which corresponds to one of the packet channels. If the channel is available for use, the BS allocates it to the requesting MS.

Because of the random choice of signature, it is possible that a MS is denied access to its selected packet channel even if there are other suitable channels available for use. This problem can lead to significant delays for a MS, as well as increased interference and loss of capacity.

The international applications WO-A-0013426 and WO-A-0007401, belonging to the state of the art according to the provisions of Art 54(3) EPC disclose a method for controlling channel access wherein a base station generates a broadcast channel frame including status information related to occupancy of resources.

The European Application EP-A 0 557 175 discloses a method for transmitting short data wherein the availability of data channels is transmitted to user equipements.

The US patent No 5,528,664 discloses a cellular telephone system having a primary station (base station). The base station transmits periodically an available channel signature for indicating the available channnels on each available channel. The signalling is made by means of specific signatures on the plurality of available data channels. Thus, each secondary station (mobile station) has to monitor all channels to obtain this signalling.

### Disclosure of Invention

An object of the present invention is to provide an efficient signalling about availability of resources in a random access channel having improved throughput and reduced transmission delays.

According to a first aspect of the present invention there is provided a radio communication system comprising a primary station and a plurality of secondary stations and having a random access channel for the transmission of data from a secondary station to the primary station, wherein the primary station has means for transmitting a random access channel status message indicating the availability of random access channel resources during unused bits in a paging indicator channel or acquisition indicator channel, using the same channelisation code as that channel and the secondary station has means for receiving the status message and means for using the contents of the message to determine what random access channel resources to request.

According to a second aspect of the present invention there is provided a primary station for use in a radio communication system having a random access channel for the transmission of data from a secondary station to the primary station, wherein means are provided for transmitting a random access channel status message indicating the availability of random access channel resources during unused bits in a paging indicator channel or acquisition indicator channel, using the same channelisation code as that channel.

According to a third aspect of the present invention there is provided a secondary station for use in a radio communication system having a random access channel for the transmission of data to a primary station, wherein means are provided for receiving a random access channel status message during unused bits in a paging indicator channel or an acquisition indicator channel, using the same channelisation code as that channel transmitted by the primary station and for using the contents of the message to determine what random access channel resources to request.

According to a fourth aspect of the present invention there is provided a method of operating a radio communication system having a random access channel for the transmission of data from a secondary station to a primary station, characterised by the primary station transmitting a random access channel status message indicating the availability of random access channel resources during unused bits in a paging indicator channel or acquisition indicator channel, using the same channelisation code as that channel; and by the secondary station receiving the status message and using the contents of the message to determine what random access channel resources to request.

### Brief Description of Drawings

Embodiments of the present invention will now be described, by way of example, with reference to the accompanying drawings, wherein:
Figure 1 is a block schematic diagram of a radio communication system;
Figure 2 illustrates a basic random access packet channel scheme;
Figure 3 illustrates an enhanced random access packet channel scheme having a packet channel availability message; and
Figure 4 is a flow chart illustrating a method in accordance with the present invention for broadcasting random access packet channel availability information.

In the drawings the same reference numerals have been used to indicate corresponding features.

### Modes for Carrying Out the Invention

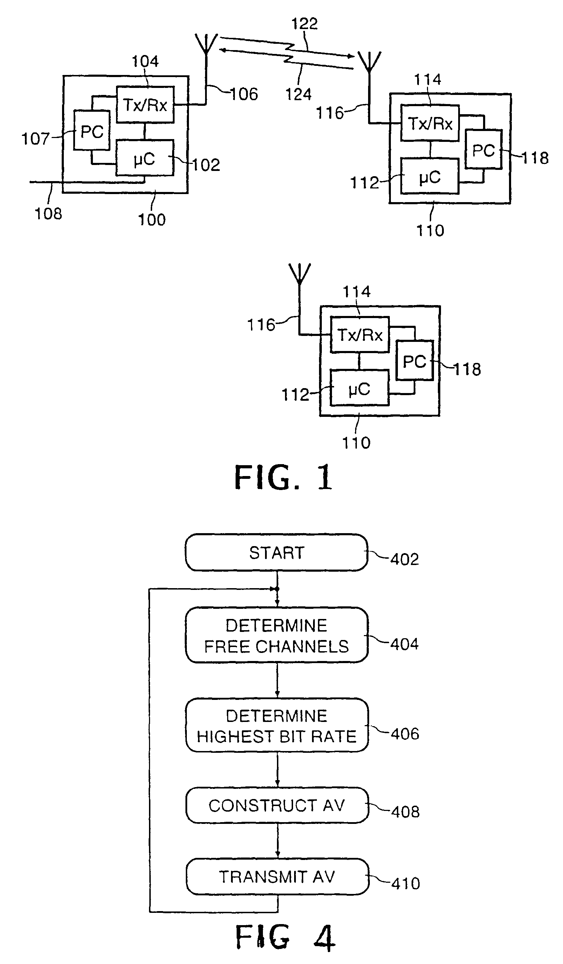

Referring to Figure 1, a radio communication system comprises a primary station (BS) 100 and a plurality of secondary stations (MS) 110. The BS 100 comprises a microcontroller (µC) 102, transceiver means (Tx/Rx) 104 connected to antenna means 106, power control means (PC) 107 for altering the transmitted power level, and, connection means 108 for connection to the PSTN or other suitable network. Each MS 110 comprises a microcontroller (µC) 112, transceiver means (Tx/Rx) 114 connected to antenna means 116, and power control means (PC) 118 for altering the transmitted power level. Communication from BS 100 to MS 110 takes place on a downlink channel 122, while communication from MS 110 to BS 100 takes place on an uplink channel 124.

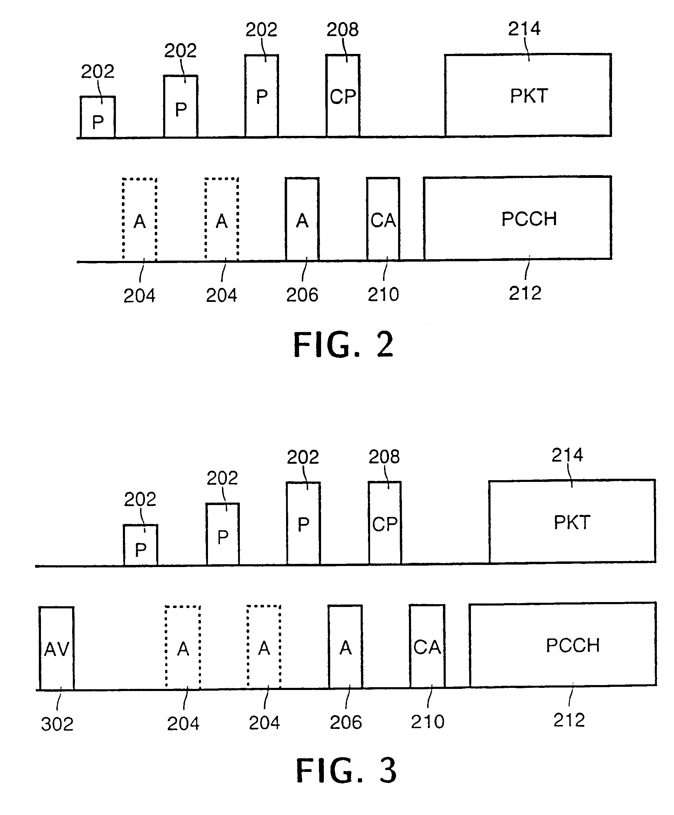

A basic scheme for a random access packet channel operating in a frequency division duplex system is shown in Figure 2, with the uplink channel 124 drawn above the downlink channel 122. In an access phase, the MS 110 first transmits a preamble (P) 202, encoded with a signature randomly chosen from a set of 16 possible signatures, at a low power level in a particular access slot. A signature is a signal characterised by its scrambling code and channelisation code modulated by a specific bit sequence. A mutually orthogonal set of signatures can be obtained by defining a set of mutually orthogonal bit sequences for the modulation. Hence, a different set of signatures can be obtained by changing the scrambling code or the channelisation code (i.e. the physical channel), or by using a different mutually orthogonal set of bit sequences. Alternatively a larger set of signatures may be defined in such a way as to have low cross correlations, rather than strict orthogonality. Although the present specification refers to sets of 16 signatures different implementations may use sets having different numbers of signatures.

In this basic scheme the choice of preamble signature for encoding the access preamble 202 determines the physical channel requested by the MS 110, with each preamble signature corresponding to a limited number of uplink and downlink channels. If the BS 100 receives and decodes the preamble correctly it transmits a preamble acknowledgement (A) 206. In the example shown in Figure 2, after the first preamble 202 is transmitted no acknowledgement is returned in the slot 204 allocated for it (which might typically be 1 ms in length). The MS 110 therefore transmits another preamble 202 at a higher power level. Again no acknowledgement is received in the slot 204, so the MS 110 transmits another preamble 202 at a still higher power. This is received and decoded by the BS 100, which transmits an acknowledgement 206 and thereby completes the access phase.

As well as informing the MS 110 that its preamble 202 has been received, the acknowledgement 206 may be positive, to signal that the requested channels are free, or negative, to signal that they are in use and access is denied to the MS 110. A negative acknowledgement (NACK) may be indicated by the BS 100 inverting the phase of the signature (with respect to some reference or pilot signal). Alternatively, some of the signatures used by the BS 100 for acknowledgement may also be used as a NACK.

The BS 100 will only transmit one acknowledgement for each access slot, however many preambles 202 were transmitted. One basis for the selection could be to acknowledge the preamble 202 received with the highest power. The initial power level at which a MS 110 transmits the preamble 202 is typically determined by the MS 110 using open loop power control, so that a MS 110 is not at a disadvantage compared to another MS 110 nearer to the BS 100. If more than one preamble 202 was transmitted but each preamble was encoded with a different signature then each MS 110 will know whether or not its preamble 202 was received correctly. However, it is possible that more than one MS 110 selected the same signature, and therefore believes that its preamble 202 has been received. If each of these mobile stations 110 begins to transmit its data the result will be a collision, with none of the data likely to be received correctly.

To reduce the chances of this happening, a contention resolution phase follows the transmission of an acknowledgement 206 which indicated that the requested channels were free. Each MS 110 which transmitted a preamble 202 encoded with a signature corresponding to that acknowledged by the BS 100 now transmits a further contention resolution preamble (CP) 208. This preamble 208 is encoded with a signature randomly selected from another set of 16 possible signatures. This set may be different from the set used for the access preamble 202 (either by changing the set of modulating bit sequences, the scrambling code or the channelisation code), or alternatively the set of signatures may be shared between access and contention resolution phases. The BS 100 then issues a contention resolution acknowledgement (CA) 210 corresponding to the selected preamble 208, for example that received with the highest power, which acknowledgement 210 enables the MS 110 to transmit its data. Hence, if more than one MS 110 selected the same access preamble 202 the chance of the same contention resolution preamble 208 also being selected is small.

After this contention resolution phase the BS 100 begins transmission of a Physical Control CHannel (PCCH) 212, which includes power control information to instruct the MS 110 to adjust its transmission power as necessary, and the MS 110 transmits one or more data packets (PKT) 214 on the allocated packet channel, which is normally on a different physical channel to those used for the preamble transmissions. The PCCH 212 may begin simultaneously with the transmission of the data 214, or may precede it sufficiently for closed loop power control to be established before the data transmission.

A particular problem with the basic scheme described above is that a MS 110 may be denied access to a packet channel corresponding to its selected preamble signature, even though other suitable channels may be available. This makes it likely that a MS 110 will spend significant time waiting for a channel to become available, particularly when traffic loading is high.

It is therefore beneficial if a MS 110 can determine what packet channel resources are available (if any) before attempting to send a packet, and also to help in selecting an appropriate preamble signature. One known way in which this can be done is for the MS 110 to monitor system activity, for example by listening for access preambles 202 and acknowledgements 206, for an extended period before packet transmission. However, this leads to significant transmission delays for the MS 110, and the information may not be completely reliable (since the MS 110 may not be able to receive all the preambles 202 and acknowledgements 206 transmitted in a cell).

An improved system, in accordance with the present invention, is shown in Figure 3 in which the BS 100 repeatedly broadcasts a packet channel availability (AV) message 302, which informs a MS 110 about the resources currently available. Broadcasting the AV message 302 once per frame is a reasonable compromise between downlink overhead and delay, since the overall transmission delay will be dominated by the time taken to transmit the data packets 214, typically a few frames. If necessary, the AV message 302 could probably be broadcast less often without major impact. A system supporting up to 16 packet channels would require 16 bits of status information per AV message 302 to indicate the availability of each channel individually.

By preventing the MS 110 from attempting to transmit unless it has an indication that a suitable resource is available, interference is minimised and the MS 110 saves power. These modifications will increase the overall throughput of the packet channel under high load conditions.

A further improvement is possible in a system in which channel assignment is carried out at the end of contention resolution. Such a system is disclosed in our co-pending UK Patent Application 0000293.1 (our reference PHGB 000003). In such a system it is only necessary to indicate whether a particular bit rate is available. For example, if there are six available bit rates (such as 60, 120, 240, 480, 960 and 1920kbps), six bits are needed to indicate the availability of each.

This can be reduced still further by adding a bit rate of 0 to the set and only broadcasting the maximum available bit rate (with a bit rate of 0 indicating that no resources are available). Then, assuming that any bit rate below the maximum available can be supported, only three bits are required.

A particularly convenient location for this message in a UMTS embodiment is as part of a paging indicator channel (PICH), which channel is used to inform a MS 110 that there is a message waiting for it. The channel has the capacity to transmit 300 bits per 10ms frame, but only 288 are required for paging indication messages. The remaining 12 bits per frame could be used to transmit an AV message 302. Alternatively, the AV message 302 could be transmitted as paging messages, or in another physical channel having the same channelisation code as the PICH but only occupying the space left by the unused bits in the PICH, or as part of any other channel having similar characteristics.

If the AV message 302 is transmitted as part of a PICH it is useful to allow a power offset between the page indication bits and the AV bits. This could allow for different quality of service requirements for the two types of information, as well as the possibility that each has different degrees of repetition coding applied. If a 3 bit AV message 302 is sent in the unused bits of a PICH, 4 times repetition coding could be applied. If a format of AV message 302 requiring more than 12 bits is selected then the message could be split, for example over two frames.

Another possible location in a UMTS embodiment is in the unused space of an Acquisition Indicator Channel (AICH), or possibly as part of the same channel. This channel transmits 300 symbols over 2 frames (20ms), but 60 symbols are unused (in 15 groups of 4 symbols). Thus the AV message 302 could be distributed over 1 or 2 frames with suitable repetition coding (depending on the number of bits in the message).

The AV message 302 is preferably sent regularly. In some circumstances exact regularity may not be possible. For example if the number of bits in the AV message 302 is not an exact sub-multiple of the number of bits available in the desired transmission period, some special measures may be needed. Some bits could be left unused. Another possibility would be to change dynamically the number of repetitions applied to the AV message 302, which would lead to variation in the interval between transmissions of the AV message. Yet another possibility is that different parts of the message may have different repetition factors, to allow the transmission interval to be filled.

The BS 100 may inform the MS 110 of the power level of the AV message 302 in order to aid more reliable detection. Such information could be sent on a common broadcast channel (BCH). The power level may be specified in relation to some other downlink channel such as a common pilot channel (CPICH).

A flow chart summarising a method in accordance with the present invention for a BS 100 broadcasting an AV message 302 is shown in Figure 4. The method starts, at step 402, when the BS 100 activates a random access packet channel. At step 404 the BS 100 determines which of the potentially available packet channels are not in use. From this information the BS 100 determines, at step 406, the highest bit rate available to a MS 110 having data for transmission on the random access packet channel. The BS 100 then uses this information to construct an AV message 302, which it transmits at step 410. Steps 404 to 410 are then repeated, typically once per frame.

A particular advantage of a method in accordance with the present invention is that the BS 100 has the flexibility to assign bit rates to channels only when they are requested, rather than pre-assigning bit rates to channels in the hope that the assignment will meet traffic requirements. The BS 100 may limit the bit rate indicated in an AV message 302, even if capacity is currently available, if such capacity may be required for other purposes.

As well as its application in a FDD system as described above, the present invention could be applied in other types of communication system. For example, it could be used in a Time Division Multiple Access (TDMA) system provided that the uplink transmissions take place in different time slots to the downlink transmissions.

The embodiments described above relate to packet transmission. However, the same principles can equally well be applied to a system in which circuits are set up for data transmission.

From reading the present description, other modifications will be apparent to persons skilled in the art. It should be understood that the scope of the present invention is defined by the appended claims.

### Industrial Applicability

The present invention is applicable to a range of radio communication systems, for example UMTS.

## Claims

1. A radio communication system comprising a primary station (100) and a plurality of secondary stations (110) and having a random access channel for the transmission of data from a secondary station (110) to the primary station (100), **characterized in that** the primary station has means (104) for transmitting a random access channel status message indicating the availability of random access channel resources during unused bits in a paging indicator channel or acquisition indicator channel, using the same channelisation code as that channel and the secondary station has means (114) for receiving the status message and means (112) for using the contents of the message to determine what random access channel resources to request.

2. A primary station (100) for use in a radio communication system having a random access channel for the transmission of data from a secondary station (110) to the primary station (100), **characterized in that** means (104) are provided for transmitting a random access channel status message indicating the availability of random access channel resources during unused bits in a paging indicator channel or acquisition indicator channel, using the same channelisation code as that channel.

3. A primary station (100) as claimed in claim 2, **characterised in that** means are provided for generating the random access channel status message as a 3 bit word.

4. A primary station (100) as claimed in claim 3, **characterised in that** means are provided for encoding the random access channel status message using 4 times repetition coding.

5. A primary station (100) as claimed in any one of claims 2 to 4, **characterised in that** means are provided for dynamically allocating bit rates to random access channels in response to requests for resources from secondary stations.

6. A secondary station (110) for use in a radio communication system having a random access channel for the transmission of data to a primary station (100), **characterized in that** means (114) are provided for receiving a random access channel status message during unused bits in a paging indicator channel or acquisition indicator channel, using the same channelisation code as that channel transmitted by the primary station and for using the contents of the message to determine what random access channel resources to request.

7. A method of operating a radio communication system having a random access channel for the transmission of data from a secondary station (110) to a primary station (100), **characterised by** the primary station (100) transmitting a random access channel status message indicating the availability of random access channel resources during unused bits in a paging indicator channel or acquisition indicator channel, using the same channelisation code as that channel;
and by the secondary station (110) receiving the status message and using the contents of the message to determine what random access channel resources to request.

8. A method as claimed in claim 7, **characterised by** the random access channel status message being broadcast regularly.

9. A method as claimed in claim 7 or 8, **characterised by** the random access channel status message indicating which random access channels are available.

10. A method as claimed in claim 7 or 8, **characterised by** the random access channel status message indicating which data rates are available on the random access channel.

11. A method as claimed in claim 7 or 8, **characterised by** the random packet channel status message indicating the highest data rate available on the random access channel.

12. A method as claimed in any one of claims 7 to 11, **characterized by** the primary station (100) dynamically allocating bit rates to random access channels in response to requests for resources from secondary stations (110).

## Patentansprüche

1. Funkkommunikationssystem mit einer Primärstation (100) und einer Anzahl Sekundärstationen (110) und mit einem Kanal mit beliebigem Zugriff zur Übertragung von Daten von einer Sekundärstation (110) zu der Primärstation (100), **dadurch gekennzeichnet, dass** die Primärstation Mittel (104) aufweist zum Übertragen einer Nachricht mit dem Zustand eines Kanals mit beliebigem Zugriff, welche die Verfügbarkeit von Kanalmitteln mit beliebigem Zugriff während nicht verwendeter Bits in einem Funkrufindikatorkanal oder einem Beantragungsindikatorkanal angibt, wobei der gleiche Kanalisationscode verwendet wird, wie der betreffende Kanal und wobei die Sekundärstation Mittel (114) aufweist zum Empfangen der Zustandsnachricht und Mittel (112) zur Verwendung des Inhalts der Nachricht um zu ermitteln, was die Kanalmittel mit beliebigem Zugriff beantragen.

2. Primärstation (100) zur Verwendung in einem Funkkommunikationssystem mit einem Kanal mit beliebigem Zugriff zur Übertragung von Daten von einer Sekundärstation (110) zu der Primärstation (100), **dadurch gekennzeichnet, dass** Mittel (104) zum Übertragen einer Zustandsnachricht des Kanals mit beliebigem Zugriff vorgesehen sind, welche die Verfügbarkeit von Kanalmitteln mit beliebigem Zugriff während nicht verwendeter Bits in einem Funkrufindikatorkanal oder Beantragungsindikatorkanal angibt, und zwar unter Verwendung des gleichen Kanalisationscodes wie der Kanal.

3. Primärstation (100) nach Anspruch 2, **dadurch gekennzeichnet, dass** Mittel vorgesehen sind zum Erzeugen der Zustandsnachricht des Kanals mit beliebigem Zugriff als 3 Bitwort.

4. Primärstation (100) nach Anspruch 3, **dadurch gekennzeichnet, dass** Mittel vorgesehen sind zum Codieren der Zustandsnachricht des Kanals mit beliebigem Zugriff unter Anwendung einer vierfachen Wiederholungscodierung.

5. Primärstation (100) nach einem der Ansprüche 2 bis 4, **dadurch gekennzeichnet, dass** Mittel vorgesehen sind zur dynamischen Zuordnung von Bitraten zu Kanälen mit beliebigem Zugriff in Reaktion auf Anträge für Mittel von Sekundärstationen.

6. Sekundärstation (110) zur Verwendung in einem Funkkommunikationssystem mit einem Kanal mit beliebigem Zugriff zur Übertragung von Daten zu einer Primärstation (100), **dadurch gekennzeichnet, dass** Mittel (114) vorgesehen sind zum Empfangen einer Zustandsnachricht eines Kanals mit beliebigem Zugriff während nicht verwendeter Bits in einem Funkrufindikatorkanal oder Beantragungsindikatorkanal, unter Verwendung des gleichen Codes wie der Kanal, der von der Primärstation übertragen wurde und zur Verwendung des Inhalts der Nachricht um zu ermitteln, welche Kanalmittel mit beliebigem Zugriff beantragt werden sollen.

7. Verfahren zum Betreiben eines Funkkommunikationssystems mit einem Kanal mit beliebigem Zugriff zur Übertragung von Daten von einer Sekundärstation (110) zu einer Primärstation (100), **gekennzeichnet durch** die Primärstation (100), welche die Zustandsnachricht des Kanals mit beliebigem Zugriff überträgt, welche die Verfügbarkeit der Kanalmittel mit beliebigem Zugriff während nicht verwendeter Bits in einem Funkrufindikatorkanal oder Beantragungsindikatorkanal angibt, und zwar unter Verwendung des gleichen Kanalisationscodes wie der Kanal.

8. Verfahren nach Anspruch 7, **dadurch gekennzeichnet, dass** die Zustandsnachricht des Kanals mit beliebigem Zugriff regelmäßig ausgesendet wird.

9. Verfahren nach Anspruch 7 oder 8, **dadurch gekennzeichnet, dass** die Zustandsnachricht des Kanals mit beliebigem Zugriff angibt, welche Kanäle mit beliebigem Zugriff verfügbar sind.

10. Verfahren nach Anspruch 7 oder 8, **dadurch gekennzeichnet, dass** die Zustandsnachricht des Kanals mit beliebigem Zugriff angibt, welche Datenraten in dem Kanal mit beliebigem Zugriff verfügbar sind.

11. Verfahren nach Anspruch 7 oder 8, **dadurch gekennzeichnet, dass** die Zustandsnachricht des Kanals mit beliebigem Zugriff die höchste Datenrate angibt, die in dem Kanal mit beliebigem Zugriff verfügbar ist.

12. Verfahren nach einem der Ansprüche 7 bis 11, **dadurch gekennzeichnet, dass** die Primärstation (100) auf dynamische Weise in Reaktion auf Anträge für Mittel von Sekundärstationen (110) Bitraten zu Kanälen mit beliebigem Zugriff zuordnet.

## Revendications

1. Système de radiocommunication comprenant une station primaire (100) et une pluralité de stations secondaires (110) et ayant un canal à accès aléatoire pour la transmission de données d'une station secondaire (110) à la station primaire (100), **caractérisé en ce que** la station primaire comporte un moyen (104) pour transmettre un message d'état de canal à accès aléatoire indiquant la disponibilité de ressource de canaux à accès aléatoire pendant les bits inutilisés d'un canal indicateur de recherche ou d'un canal indicateur d'acquisition, en utilisant le même code de découpage en canaux que ce canal, et **en ce que** la station secondaire comporte un moyen (114) pour recevoir le message d'état et un moyen (112) pour utiliser le contenu du message afin de déterminer quelles ressources de canaux à accès aléatoire demander.

2. Station primaire (100) pouvant être utilisée dans un système de radiocommunication ayant un canal à accès aléatoire pour la transmission de données d'une station secondaire (110) à la station primaire (100), **caractérisée en ce que** des moyens (104) sont prévus pour transmettre un message d'état de canal à accès aléatoire indiquant la disponibilité de ressources de canaux à accès aléatoire pendant les bits inutilisés d'un canal indicateur de recherche ou d'un canal indicateur d'acquisition, en utilisant le même code de découpage en canaux que ce canal.

3. Station primaire (100) selon la revendication 2, **caractérisée en ce que** des moyens sont prévus pour générer le message d'état de canal à accès aléatoire sous la forme d'un mot à 3 bits.

4. Station primaire (100) selon la revendication 3, **caractérisée en ce que** des moyens sont prévus pour coder le message d'état de canal à accès aléatoire en utilisant un codage à répétition de 4 fois.

5. Station primaire (100) selon l'une quelconque des revendications 2 à 4, **caractérisée en ce que** des moyens sont prévus pour allouer dynamiquement des débits binaires à des canaux à accès aléatoire en réponse à des demandes de ressources provenant de station secondaires.

6. Station secondaire (110) pouvant être utilisée dans un système de radiocommunication ayant un canal à accès aléatoire pour la transmission de données à une station primaire (100), **caractérisée en ce que** des moyens (114) sont prévus pour recevoir un message d'état de canal aléatoire pendant les bits inutilisés d'un canal indicateur de recherche ou d'un canal indicateur d'acquisition, en utilisant le même code de découpage en canaux que ce canal transmis par la station primaire, et pour utiliser le contenu du message afin de déterminer quelles ressources de canaux à accès aléatoire demander.

7. Procédé de mise en fonctionnement d'un système de radiocommunication ayant un canal à accès aléatoire pour la transmission de données d'une station secondaire (110) à une station primaire (100), **caractérisée par le fait que** la station primaire (100) transmet un message d'état de canal à accès aléatoire indiquant la disponibilité de ressources de canaux à accès aléatoire pendant les bits inutilisés d'un canal indicateur de recherche ou d'un canal indicateur d'acquisition, en utilisant le même code de découpage en canaux que ce canal ; et **par le fait que** la station secondaire (110) reçoit le message d'état et utilise le contenu du message pour déterminer quelles ressources de canaux à accès aléatoire demander.

8. Procédé selon la revendication 7, **caractérisé par le fait que** le message d'état de canal à accès aléatoire est diffusé régulièrement.

9. Procédé selon la revendication 7 ou 8, **caractérisé par le fait que** le message d'état de canal à accès aléatoire indique quels canaux à accès aléatoire sont disponibles.

10. Procédé selon la revendication 7 ou 8, **caractérisé par le fait que** le message d'état de canal à accès aléatoire indique quels débits de données sont disponibles sur le canal à accès aléatoire.

11. Procédé selon la revendication 7 ou 8, **caractérisé par le fait que** le message d'état du canal par paquets à accès aléatoire indique le débit de données le plus élevé disponible sur le canal à accès aléatoire.

12. Procédé selon l'une quelconque des revendications 7 à 11, **caractérisé par le fait que** la station primaire (100) alloue dynamiquement des débits binaires à des canaux à accès aléatoire en réponse à des demandes de ressources provenant de stations secondaires (110).
